Europäisches Patentamt

European Patent Office

Office européen des brevets

(11) Publication number: **0 084 429**
**B1**

(12) **EUROPEAN PATENT SPECIFICATION**

(45) Date of publication of patent specification: **23.04.86**

(21) Application number: **83300138.1**

(22) Date of filing: **11.01.83**

(51) Int. Cl.⁴: **H 04 B 3/54,** G 08 B 25/00

(54) Automatic receiver gain control in centralized monitor system.

(30) Priority: **11.01.82 JP 3178/82**

(43) Date of publication of application:
**27.07.83 Bulletin 83/30**

(45) Publication of the grant of the patent:
**23.04.86 Bulletin 86/17**

(84) Designated Contracting States:
**DE FR GB IT**

(56) References cited:
**DE-A-2 139 562**
**FR-A-2 075 588**
**GB-A-1 332 520**
**GB-A-2 016 245**
**GB-A-2 039 402**
**US-A-4 041 239**
**US-A-4 101 834**
**US-A-4 163 218**

(73) Proprietor: **SHARP KABUSHIKI KAISHA**
**22-22 Nagaike-cho Abeno-ku**
**Osaka 545 (JP)**

(72) Inventor: **Ise, Masahiro**
**2187-A81-203 Mise-cho**
**Kashihara-shi Nara-ken (JP)**
Inventor: **Tanaka, Hidehiko**
**2613-1 Ichinomoto-cho**
**Tenri-shi Nara-ken (JP)**
Inventor: **Machino, Katsuyuki**
**1-31-101 Higashikidera-cho**
**Nara-shi Nara-ken (JP)**
Inventor: **Matsubara, Toshiyuki**
**2613-1 Ichinomoto-cho**
**Tenri-shi Nara-ken (JP)**
Inventor: **Terasaka, Teiji**
**2613-1 Ichinomoto-cho**
**Tenri-shi Nara-ken (JP)**

(74) Representative: **Wright, Peter David John et al**
**R.G.C. Jenkins & Co. 12-15, Fetter Lane**
**London EC4A 1PL (GB)**

Courier Press, Leamington Spa, England.

# Description

Generally speaking, when an internal power line is used as the data transmission path so as to reduce the cost of a centralized monitor system in collective residences such as condominiums, since a variety of electric appliances are connected to the power line, both the impedance and noise level through the power line are randomly variable. As a result, if the receiving level remains stationary and the signal level decreases, data will be missed or the signal itself may not be received due to the presence of noise components.

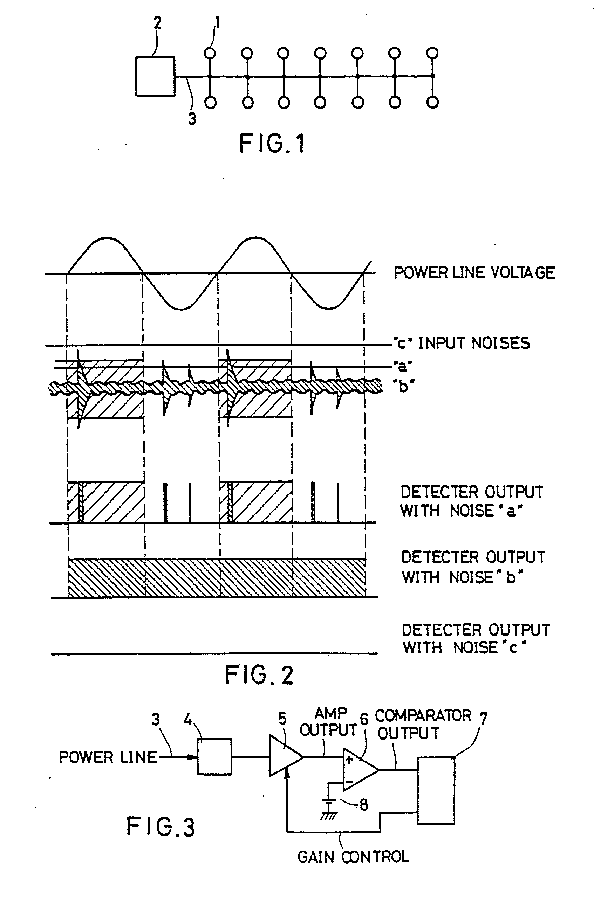

The present invention relates to a means for providing an optimum signal receiving level under such circumstances, Figure 1 shows the construction of a centralized monitor system, in which typically transmission sub units 1, each incorporating a sensor, monitor panel 2 as the main unit, and a power line 3 as the data transmission path, are provided.

The monitor panel 2 transmits an answer back request instruction in order to check periodically a variety of the existing conditions of the sub units. Assuming that the period of such a checking operation is "r", if the monitor unit still cannot receive any data from any of the sub units after a maximum period of 2r has elapsed, then it shows that the pre-set signal receiving level is too low. On the other hand, there is a certain noise component caused by a variety of electric appliances, which constantly flows through the power line at a much higher level than the white level. As a result, if the signal receiving level is too sensitive, the monitor panel cannot correctly identify an opponent received signal as a time signal or noise, and so no signals can be received. The optimum receiving level is between the ranges of the signal and noise.

In general, since there are a variety of noises that flow through the power line, data cannot be transmitted effectively merely by lowering the signal sensitivity after detecting any of the noise components.

Our co-pending European patent application No. 82305684.1, filed on 26th October, 1982 (published on 2nd May, 1984 under No. 0106924), concerns a data transmission system using the power supply line in order to send and receive the carrier synchronously with the power source frequency, in which a certain phase period in the power waveform, for example, one half period of the power waveform, is designated as carrying one bit of binary data "1" and "0", and two such bits provide one bit of transmitted data, so that 10 (or 01) is transmitted to signify data "1" and 01 (or 10) to signify data "0". During the signal reception period, either the number of pulses apparently signifying the presence of the carrier in the corresponding phase period is counted or the length of time for which such pulses occur is measured and the difference in the length of time for the pulses between the two transmission bit periods for one data bit is derived, and data is only treated as having been received if a pre-set value is exceeded.

An example of this system is shown in Figure 2. If the noise components (shown by fine shading) and the signal components (shown by coarse shading) co-exist and if the detection level is set at position "a", the signal can be correctly detected, although a certain amount of noise may remain. If the detection level is at position "b", the deleted input cannot be identified as either a signal or noise, and no signal can be received. If the detection level is at position "c", neither noise nor signal can be detected. In the method described above of EP—A—0106924, if the difference in lengths of times of carrier signal is below the pre-set value, the input is rejected as noise. However, it can be seen from Figure 2 that, after the software procedures are completed, the only combinations of transmission bits which can be received are in principle 01 and 10, while the receipt of such bits as 00 and 11 is caused solely by inadequate sensitivity.

In other words, assuming that the half period of the power source corresponds to the transmission or basic bit period, the four basic bit combinations shown in the table below respectively have the meanings given when they are received.

| Basic bits | Meanings |
|---|---|
| 00 | Data level is too low |
| 01 | Data is "0" |
| 10 | Data is "1" |
| 11 | Too much noise exists |

A system is also disclosed in GB—A—1332520 in which signals are transmitted down power lines. In that system a "1" is represented by the presence of a signal in one half-cycle of the ac power oscillation and the absence of a signal in the other half-cycle, a "0" being represented by the absence of a signal in the first half-cycle and the presence of a signal in the second. Automatic gain control is proposed to compensate for signal level variations. However, there is no suggestion that the reception of an opponent signal in both half-cycles or the opponent lack of it in both half-cycles have any significance or could be used to control the signal reception sensitivity.

We propose that the information in the above table should be used to control the signal sensitivity. When transmission or basic bits "00" are received, the sensitivity is too low. When "11" is received, the sensitivity is too high.

Signal sensitivity is variable by (1) varying the reference level of the level detector, and (2) by varying the gain of the receiver. However, due to saturation effects that limit the transmission of receivable signals, method (2) is preferable.

According to the present invention there is provided a centralized monitoring system in a building comprising a plurality of sensors (1) disposed in different locations of the building and coupled with a central monitoring station (2) arranged to poll the sensors (1) periodically and to receive answer-back signals therefrom indicative of the condition thereof, the polling and answer-back signals being transmitted via the internal power cabling (3) of the building the system operating by use of a transmission code in which the data bits "1" and "0" are represented in transmission by two transmission bits of which one is a "1" and the other is a "0" in each case, characterised in that

the system uses the receipt of transmission bit pairs "1,1" and "0,0" to vary the signal reception sensitivity to optimise the sensitivity in view of the noise level, receipt of transmission bit pair "1,1" being taken to indicate that the sensitivity is too high and receipt of transmission bit pair "0,0" being taken to indicate that the sensitivity is too low.

According to the present invention there is also provided a method of reducing the susceptibility to noise of signal transmission in a centralised monitoring system in a building in which signals are transmitted between a central monitoring station (2) and a plurality of sensors (1) via the internal power cabling (3) of the building and in which transmission bit pairs each comprising one "0" and one "1" are used to transmit data bits "0" and "1", characterised in that

the receipt of the transmission bit pair "1,1" is used to indicate that the signal reception sensitivity of the system should be lowered and the receipt of the transmission bit pair "0,0" is used to indicate that the signal reception sensitivity of the system should be increased.

The central monitoring station may display any alarm information received from the sensors, and the system may generate an alarm when alarm information is received.

An embodiment of the present invention, given by way of example, will now be described with reference to the accompanying drawings, in which:

Figure 1 shows a simplified basic diagram of a centralized monitor system embodying the present invention;

Figure 2 shows a time chart describing the operation of the centralized monitor system of Figure 1;

Figure 3 shows a block diagram of a gain control system for an embodiment of the present invention; and

Figure 4 shows a flow chart describing the operative procedures of the system shown in Figure 3.

In Figure 3, a gain control system comprises a receiver filter 4, a variable gain amplifier 5, a comparator 6, a data processing and amplifier gain control microcomputer 7, and a comparator reference voltage generator 8. The output level of the reference voltage generator 8 is selected to be at one half the maximum amplitude of the amplifier 5.

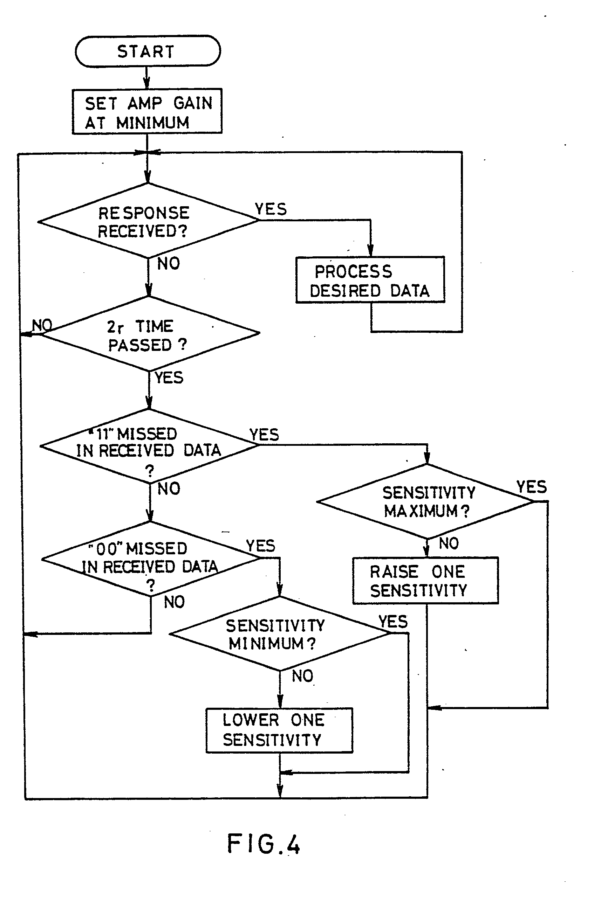

As shown in Figure 4, if a binary code 11 is not present in the received data after a period of 2r has passed, and no response signal has been received, the sensitivity of the variable gain amplifier 5 is increased by one step, whereas the sensitivity is lowered by one step if a binary code 00 is not present in the received data. Accordingly, an optimum signal receiving sensitivity can be selected automatically within the range of variation (between the maximum and minimum sensitivities) of the receiver gain.

If the bits 00 and 11 are simultaneously generated, it means that data signals are encountered with an abnormally intense interference.

There are two means to vary the incoming signal level properly, one is to vary the level by basic steps and the other is to apply variable steps in sequence as with the normal A/D conversion method. Of these, since each step requires a certain answer-back time, the latter method should preferably be selected.

For example, assuming that the signal receiving level is set by 4 bits, a basic step is applied to a variable level by adding either 0001 or 1111 (−1) to the 4 bits. When a sequence of variable steps is applied, a binary code 1 is provisionally adopted for the next bit in sequence, starting with the most significant bit, and then the said binary code 1 is retained in this position if the result is satisfactory, while the other binary code 0 will replace 1 if the result is not satisfactory, and so an optimum signal receiving level can properly be selected.

In this way the signal receiving level can be controlled automatically at an optimum position despite the presence of a variety of noise components, and as a result a centralized monitor system can be provided with a good resistance to failure to receive signals due to noise interference.

**Claims**

1. A centralized monitoring system in a building comprising a plurality of sensors (1) disposed in different locations of the building and coupled with a central monitoring station (2) arranged to poll the sensors (1) periodically and to receive answer-back signals therefrom indicative of the condition thereof, the polling and answer-back signals being transmitted via the internal power cabling (3) of the building the system operating by use of a transmission code in which the data bits "1" and "0" are represented in transmission by two transmission bits of which one is a "1" and the other is a "0" in each case, characterised in that

the system uses the receipt of transmission bit pairs "1,1" and "0,0" to vary the signal reception sensitivity to optimise the sensitivity in view of the noise level, receipt of transmission bit pair "1,1" being taken to indicate that the sensitivity is too high and receipt of transmission bit pair "0,0" being taken to indicate that the sensitivity is too low.

2. A system according to claim 1 in which, if no response from the sensors has been received by the central monitoring station within a predetermined period, the signal reception sensitivity is increased if the transmission bits "1,1" have not been received and is reduced if the transmission bits "0,0" have not been received.

3. A system according to claim 1 or claim 2 in which the signal reception sensitivity is varied by varying the gain in the signal receiving means.

4. A method of reducing the susceptibility to noise of signal transmission in a centralized monitoring system in a building in which signals are transmitted between a central monitoring station (2) and a plurality of sensors (1) via the internal power cabling (3) of the building and in which transmission bit pairs each comprising one "0" and one "1" are used to transmit data bits "0" and "1", characterised in that

the receipt of the transmission bit pair "1,1" is used to indicate that the signal reception sensitivity of the system should be lowered and the receipt of the transmission bit pair "0,0" is used to indicate that the signal reception sensitivity of the system should be increased.

**Patentansprüche**

1. Zentrale Überwachungseinrichtung für Gebäude mit einer Mehrzahl von an unterschiedlichen Orten des Gebäudes angeordneten Sensoren (1), die mit einer zentralen Überwachungsstation (2) verbunden sind, welche den jeweiligen Sensorzustand angebende Rückantwortsignale von den Sensoren (1) periodisch abfragt, wobei die Abfrage- und Rückantwortsignale über ein internes Stromversorgungsnetz (3) des Gebäudes mittels eines Übertragungscodes übertragen werden, dessen Datenbits "1" und "0" während der Übertragung jeweils durch zwei Übertragungsbits repräsentiert sind, von denen in jedem Fall das eine eine "1" und das andere eine "0" ist, dadurch gekennzeichnet, daß der Empfang von übertragenen Bitpaaren "1,1" und "0,0" zur Änderung der Signalempfangsempfindlichkeit und zur Optimierung der Empfindlichkeit im Hinblick auf den Rauschpegel in der Weise benutzt wird, daß die Übertragung des Bitpaars "1,1" als Anzeige für zu hohe Empfindlichkeit und der Empfang des Bitpaars "0,0" als Anzeige für zu niedrige Empfindlichkeit bewertet werden.

2. Einrichtung nach Anspruch 1, dadurch gekennzeichnet, daß—falls innerhalb einer festgelegten Periode kein Antwortsignal der Sensoren durch die zentrale Überwachungsstation empfangen wurde—die Signalempfangsempfindlichkeit erhöht wird, wenn die Übertragungsbits "1,1" nicht eintreffen und vermindert wird, wenn die Übertragungsbits "0,0" nicht eintreffen.

3. Einrichtung nach Anspruch 1 oder 2, dadurch gekennzeichnet, daß die Empfangsempfindlichkeit durch Veränderung des Verstärkungsfaktors der Signalempfangseinrichtung variierbar ist.

4. Verfahren zur Verminderung der Störanfälligkeit gegen Rauschen bei der Signalübertragung in einer zentralen Überwachungseinrichtung für Gebäude, bei welcher Signale zwischen einer zentralen Überwachungsstation (2) und einer Mehrzahl von Sensoren (1) über das interne Stromversorgungsnetz (3) des Gebäudes übertragen werden und bei welchem Bitpaare, die jeweils eine "0" und eine "1" enthalten, zur Informationsübertragung von Datenbits benutzt werden, die aus "0" und "1" bestehen, dadurch gekennzeichnet, daß der Empfang des Übertragungsbitpaars "1,1" als Anzeige dafür benutzt wird, daß die Signalempfangsempfindlichkeit der Einrichtung zu erniedrigen ist und der Empfang des Übertragungsbitpaars "0,0" als Anzeige dient, um die Signalempfangsempfindlichkeit der Einrichtung zu erhöhen.

**Revendications**

1. Système centralisé de surveillance dans un bâtiment, comprenant une série de capteurs (1) disposés en différents points du bâtiment et accouplés à un poste central de surveillance (2) conçu pour interroger périodiquement les capteurs (1) et recevoir de ceux-ci des signaux de réponse indiquant leur état, les signaux d'interrogation et de réponse étant transmis par l'intermédiaire du câblage interne d'alimentation en énergie (3) du bâtiment, le système fonctionnant grâce à l'utilisation d'un code de transmission selon lequel les bits de données "1" et "0" sont représentés, lors de la transmission, par deux bits de transmission dont l'un est un "1" et dont l'autre est un "0" dans chaque cas, caractérisé en ce que le système utilise la réception des couples de bits de transmission "1,1" et "0,0" pour modifier la sensibilité de réception des signaux afin d'optimiser cette sensibilité en fonction du niveau de parasitage, la réception du couple de bits de transmission "1,1" étant considérée comme indiquant que la sensibilité est trop élevée, et la réception du couple de bits de transmission "0,0" étant considérée comme indiquant que la sensibilité est trop faible.

2. Système selon la revendication 1, dans lequel, si aucune réponse n'a été reçue des capteurs par le poste central de surveillance pendant un intervalle de temps prédéterminé, la sensibilité de réception des signaux est augmentée si les bits de transmission "1,1" n'ont pas été reçus et est réduite si les bits de transmission "0,0" n'ont pas été reçus.

3. Système selon la revendication 1 ou 2, dans lequel la sensibilité de réception des signaux est modifiée par une variation du gain dans les moyens de réception des signaux.

4. Procédé pour réduire la sensibilité au parasitage de la transmission de signaux dans un système centralisé de surveillance dans un bâtiment, selon lequel des signaux sont transmis entre un poste central de surveillance (2) et une série de capteurs (1), par l'intermédiaire du câblage interne (3) d'alimentation en énergie du bâtiment, et selon lequel des couples de bits de transmission, comprenant chacun un "0" et un "1", sont utilisés pour transmettre les bits de données "0" et "1", caractérisé en ce que la reception du couple de bits de transmission "1,1" est utilisée pour indiquer que la sensibilité de réception des signaux du système devrait être réduite, et la réception du couple de bits de transmission "0,0" est utilisée pour indiquer que la sensibilité de réception des signaux du système devrait être augmentée.

FIG.1

POWER LINE VOLTAGE

"c" INPUT NOISES

"a"

"b"

DETECTER OUTPUT
WITH NOISE "a"

DETECTER OUTPUT
WITH NOISE "b"

DETECTER OUTPUT
WITH NOISE "c"

FIG. 2

FIG.3

FIG.4